# EUROPÄISCHE PATENTSCHRIFT

(11) **EP 0 505 978 B1**
(45) Veröffentlichungstag und Bekanntmachung des Hinweises auf die Patenterteilung: **19.01.1994**
(21) Anmeldenummer: 92105044.9
(22) Anmeldetag: 24.03.1992
(51) Int. Cl.: H04M 11/02

(54) **Zweidraht-Türsprechanlage mit Freisprechfunktion**
Two-wire door telephone with hands-free function
Dispositif d'interphone à deux fils avec fonction à mains libres

(30) Priorität: 27.03.1991 DE 9103782 U
(43) Veröffentlichungstag der Anmeldung: 30.09.1992
(73) Patentinhaber: TELKO GmbH, D-86836 Untermeitingen (DE)
(72) Erfinder:
(74) Vertreter: Gallo, Wolfgang, Dipl.-Ing. (FH)

(56) Entgegenhaltungen:
- DE-A- 2 403 096
- FR-A- 2 535 926

## Beschreibung

Die Erfindung betrifft eine Türsprechanlage nach dem Oberbegriff des Anspruchs 1, bestehend aus einer Türstation und mindestens einer damit verbundenen Innenstation, und mit den Funktionen Rufen der Innenstation von der Türstation aus, Sprechen zwischen Türstation und Innenstation, und Türöffnen von der Innenstation aus.

Dabei bezieht sich die Erfindung auf eine als Freisprechanlage ausgebildete Türsprechanlage, d.h. nicht nur an der Türstation, sondern auch an jeder Innenstation erfolgt das Sprechen direkt in das Gerät ohne Benutzung eines Handapparats.

Bekannte Türsprechanlagen mit diesen Funktionen, die als Freisprechanlagen arbeiten, sind entweder als Wechselsprechanlagen oder als Gegensprechanlagen ausgeführt. Bei Wechselsprechanlagen erfolgt das Wechselsprechen aufgrund manueller Umschaltung der Sprechrichtung an der Innenstation. Solche Wechselsprechanlagen sind auch schon in der Ausführung als Zweidrahtanlage bekannt, d.h. zwischen Türstation und Innenstation genügt eine zweidrähtige Anschlußleitung. Bei bekannten Gegensprechanlagen ist für die Verbindung zwischen Türstation und Innenstation eine mindestens dreiadrige Verbindungsleitung erforderlich.

Bei der nachträglichen Installation von Türsprechanlagen in Gebäuden, die bisher nur über einfache Klingelanlagen verfügen, ist es natürlich wünschenswert, die Anlage unter Weiterverwendung der vorhandenen zweiadrigen Klingelleitungen aufzubauen, denn eine Erweiterung der Klingelleitungsinstallation um einen weiteren Draht würde zumindest dann einen unvertretbaren Aufwand bedeuten, wenn die Klingelleitungen nicht im Rohr, sondern ohne Rohr im Putz verlegt sind, was gerade in Altbauten überwiegend der Fall ist.

Aus diesem Grund können nur Zweidraht-Türsprechanlagen, nicht aber mit mehr als zweiadrigen Verbindungsleitungen arbeitende Türsprechanlagen ohne weiteres in Altbauten mit herkömmlicher Klingelanlage nachgerüstet werden.

Zwar gehören auch zweiadrige Gegensprechanlagen als Türsprechanlagen bereits dem Stand der Technik an, jedoch sind diese nicht als Freisprechanlagen ausgeführt, sondern haben Innenstationen mit Handapparaten, also Telefone. Diese bekannten Anlagen sind in den DE-Patentschriften 21 56 517 und 25 47 188 beschrieben. Auch die DE-A-24 03 096 zeigt eine derartige Anlage, wobei nur die Außenstation im Freisprechbetrieb funktioniert.

Zwar ist bei diesen als Telefonanlagen ausgebildeten bekannten Türsprechanlagen eine gute Sprachübertragung an der Innenstation gewährleistet, indem der ankommende Schall mittels des Handapparats über dessen Lautsprecher unmittelbar dem Ohr des Benutzers zugeführt und der abgehende Schall mittels des Mikrofons des Handapparats unmittelbar am Mund des Benutzers aufgenommen wird. Demgegenüber stehen aber die oft als erheblich empfundenen Nachteile, daß
- das Gespräch mit dem Besuch nicht freihändig geführt werden kann, weil eine Hand den Handapparat halten muß und dann auch noch die andere Hand zur Betätigung des Türöffnerknopfes oder dergleichen benutzt werden muß;
- die Innenstation mit dem Handapparat und seiner notwendigerweise eine gewisse Länge aufweisenden flexiblen Anschlußleitung verhältnismäßig voluminös ist und einem großen Beschädigungsrisiko ausgesetzt ist, einmal weil diese Geräte von Seiten der Teilnehmer oft unpfleglich behandelt werden, und andererseits, weil der von der Wand ziemlich abstehende Apparat der Gefahr des Anstoßens vorbeigehender Personen ausgesetzt ist.

Allerdings läßt sich eine solche mit Handapparat arbeitende Gegensprechanlage nicht einfach durch Anordnen eines feststehenden Lautsprechers und eines feststehenden Mikrofons im Gerätegehäuse als Freisprechanlage ausführen. Denn dabei ergeben sich wegen der größeren Entfernung zwischen Ohr bzw. Sprechorgan und den Schallwandlern besondere übertragungsschwierigkeiten, es sind größere Verstärkungen der Sprechströme notwendig und gegenüber dem Handapparat existiert eine weitaus stärkere akustische Kopplung zwischen den Schallwandlern, also zwischen Lautsprecher und Mikrofon. Dies bedeutet aber, daß die durch den Zweidrahtbetrieb bedingte zusätzliche Rückkopplung zwischen Sende- und Empfangsrichtung sehr klein gehalten werden muß, um bei genügend hoher Verstärkung in beiden Richtungen die erforderliche Pfeifsicherheit zu erreichen, damit bei normalem Sprechen am anderen Ende des Übertragungswegs der Schalldruck noch genügend hoch ist.

Desweiteren muß die Innenstation, die ja keinen eigenen Netzanschluß hat, über die zweidrähtige Anschlußleitung zur Türstation mit genügendem Speisegleichstrom zum Betrieb der benötigten Verstärker, vor allem des Lautsprecherverstärkers, versorgt werden und es müssen ausreichende Sprechwechselströme für eine einwandfreie Übertragung übertragen werden können. Ferner erschwert der je nach Leitungslänge und Leitungsquerschnitt unterschiedliche Anschlußwiderstand der Innenstationen einen sauberen Abgleich sowohl in der Türstation als auch in den Innenstationen. Dadurch wird die sonst bei gegebener Pfeifsicherheit mögliche Summe der Verstärkung in den beiden Übertragungsrichtungen herabgesetzt, mit der Folge, daß die Lautstärke an einer oder an beiden Sprechstellen zu niedrig ist.

Aufgrund der aufgezeigten Probleme gibt es derzeit keine als Freisprechanlagen ausgeführten zweidrähtigen Türsprechanlagen für Gegensprechbetrieb.

Der Erfindung liegt die Aufgabe zugrunde, eine im Gegensprechbetrieb arbeitende Türsprechanlage als Freisprechanlage zu schaffen, um sie ohne zusätzliche Installationsarbeiten in Verbindung mit zweidrähtigen Klingelleitungen - wobei eine Ader allen Innenstationen gemeinsam sein kann - installieren zu können, wobei die Leistungsfähigkeit wenigstens derjenigen einer herkömmlichen Anlage mit mehr Leitungsadern entsprechen muß.

Diese Aufgabe wird gemäß der Erfindung durch die im Anspruch 1 gekennzeichnete Türsprechanlage gelöst.

Vorteilhafte Ausgestaltungen der Erfindung sind Gegenstand der Unteransprüche.

Die erfindungsgemäße Türsprechanlage hat den Vorteil, daß die Innenstationen im Gegensatz zu den mit Handapparaten arbeitenden herkömmlichen Anlagen als kompaktes flaches Gerät ohne frei bewegliche Teile ausgebildet sein können. Damit ist ihr Platzbedarf wesentlich geringer, sie sind gegen Beschädigungen weitaus besser geschützt und sie bieten ein Maximum an Bequemlichkeit und Bedienungsfreundlichkeit. Ein einfaches Ein- und Ausschalten mittels einer Taste genügt zur Aufnahme und Beendigung des Sprechbetriebs. Die Sprechbereitschaft der Anlage kann dabei optisch angezeigt werden. Eine Zeitschaltung zum automatischen Abschalten des Sprechbetriebs schaltet vorteilhafterweise die Leitung des gerufenen Teilnehmers nach einer gewissen Zeitspanne automatisch ab, falls dieser vergessen haben sollte, bei Gesprächsbeendigung die Schalttaste zum Ausschalten zu betätigen. Das Gespräch des Teilnehmers kann geführt werden, während beide Hände frei sind.

Um zu verhindern, daß in Innenstation und Türstation die vom Mikrofon kommenden Sprechströme teilweise an der Leitungsanschlußstelle reflektiert und auf den Lautsprecher gekoppelt werden, wodurch es dann durch die unvermeidliche akustische Kopplung zwischen Lautsprecher und Mikrofon zu Rückkopplungspfeifen kommen würde, sind zur Ankopplung von Mikrofon- und Lautsprecherzweig an die Leitung geeignete Brückenschaltungen eingesetzt.

Außer den Verstärkern für die Mikrofone von Innenstation und Türstation sowie den Lautsprecher der Türstation wird auch für den Lautsprecher der Innenstation ein Verstärker benötigt. Dieser Verstärker ist nicht in der Türstation, sondern direkt in der Innenstation angeordnet, um dort eine ausreichende Lautstärke sicherzustellen. Im übrigen würde der Lautsprecher sonst, d.h. ohne vorgeschalteten Verstärker, wegen seines nichtlinearen Scheinwiderstandsverlaufs über der Frequenz eine genügend genaue Nachbildung in der Brückenschaltung der Türstation praktisch unmöglich machen.

Durch den Einsatz von Konstantstromschaltungen, die eine hohe Impedanz für die Sprechwechselströme haben, wird das Problem der ausreichenden Gleichstromspeisestromversorgung der Innenstation über die nur zweiadrige Verbindungsleitung von der Türstation aus gelöst, damit der Lautsprecherverstärker der Innenstation die nötige Ausgangsleistung abgeben kann. An der Türstation wird der zur Versorgung der Innenstation nötige Gleichstrom auf die Verbindungsleitung eingekoppelt und an der Innenstation wieder ausgekoppelt.

Um den Einsatzpunkt des Rückkopplungspfeifens der Anlage nach unten zu drücken, also um eine höhere Gesamtverstärkung zu ermöglichen, werden die durch die Lautsprechergehäuseresonanzen usw. bedingten Amplitudenüberhöhungen im Übertragungsbereich durch Bandsperren in der Türstation gedämpft. Für eine zusätzliche Stabilität der Verstärker sind die Betriebsspannungen sowohl in der Türstation als auch in den Innenstationen stabilisiert.

Im Ruhezustand der Anlage, also so lange keine Innenstation eingeschaltet ist, ist der Eingangsverstärker in der Türstation gesperrt. Damit wird verhindert, daß durch den dann bestehenden Fehlabgleich der Brückenschaltung der Türstation ein Rückkopplungspfeifen auftritt.

Damit der je nach Länge und Querschnitt der Verbindungsleitungen unterschiedliche Gesamtscheinwiderstand einer angeschlossenen Innenstation die Sperrdämpfung der Brückenschaltungen nicht wesentlich verschlechtert, werden die Innenwiderstände von Tür- und Innenstation ausreichend hoch gewählt. Außerdem ergänzt eine Regelschaltung den Leitungslängswiderstand immer auf einen vorgegebenen konstanten Wert.

Ein Ausführungsbeispiel der Erfindung wird nachstehend unter Bezugnahme auf die anliegenden Zeichnungen mehr im einzelnen erläutert. Darin zeigt:
- Fig. 1: ein Blockschaltbild einer Türsprechanlage nach der Erfindung mit Türstation und mehreren Innenstationen,
- Fig. 2: ein schematisches Schaltbild der Türstation und einer angeschlossenen Innenstation mehr im einzelnen,
- Fig. 3: die Konstantstromquelle der Türstation mit Schutzschaltung,
- Fig. 4: das Gehäuse einer Innenstation in perspektivischer Ansicht, und
- Fig. 5: eine schematische Darstellung des mechanischen Innenaufbaus einer Innenstation.

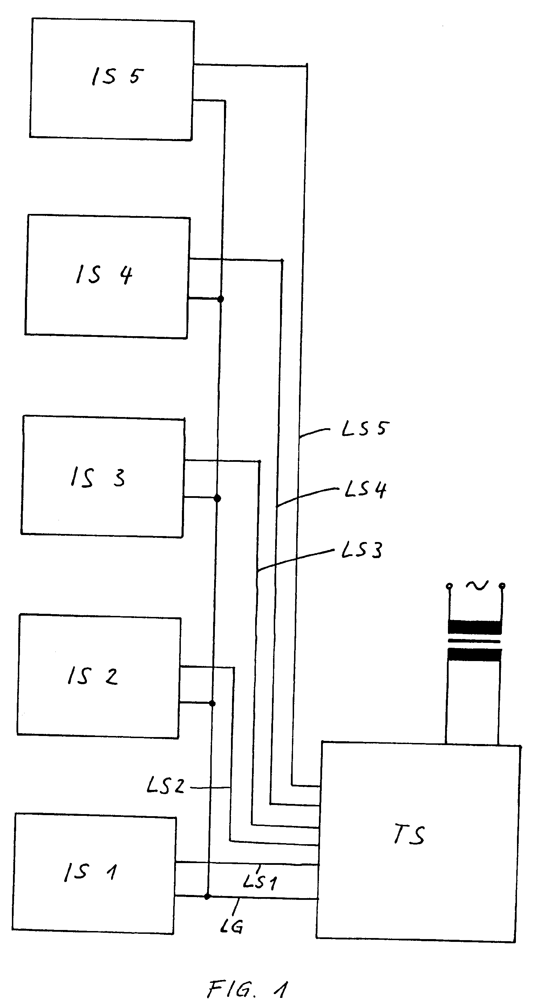

Figur 1 zeigt schematisch eine Türsprechanlage mit einer Türstation TS und mehreren Innenstationen IS1 ... IS5, die durch jeweils zweiadrige Verbindungsleitungen mit jeweils einer Signalleitungsader LS1 ... LS5 und einer zweiten, allen Innenstationen gemeinsamen Leitungsader LG mit der Türstation verbunden sind. Die Türstation TS ist über einen Netztrafo TR an das Wechselstromnetz angeschlossen und speist außerdem einen Türöffner TÖ.

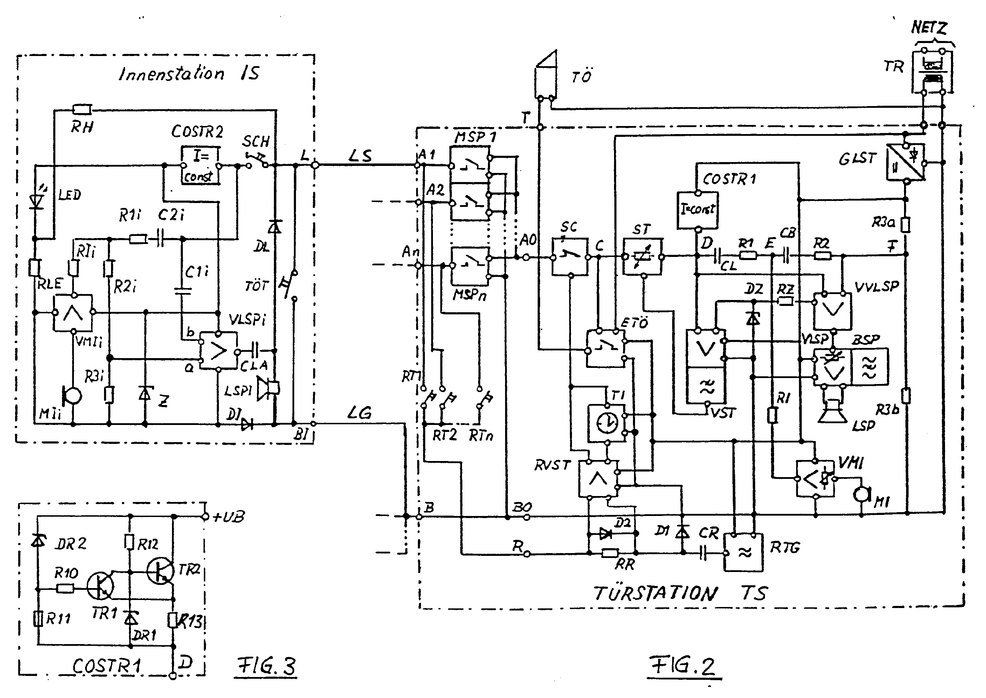

Figur 2 zeigt ein Blockschaltbild der Türstation TS und einer daran angeschlossenen Innenstation IS.

Die Türstation TS weist folgende Komponenten auf:
- eine dem Netztrafo TR nachgeschaltete Gleichrichter- und Spannungstabilisierungsschaltung GLST, welche aus der Netzwechselspannung eine stabilisierte Betriebsgleichspannung erzeugt;
- einen Lautsprechervorverstärker VVLSP und einen regelbaren Lautsprecherverstärker LSP mit integrierten Bandsperren BSP;
- einen Lautsprecher LST;
- ein Mikrofon MI;
- einen regelbaren Mikrofonverstärker VMI mit Ausgangswiderstand RI;
- einer Brückenschaltung aus Widerständen R1, R2, R3a, R3b und Kondensatoren CL und CB;
- eine Konstantstromschaltung COSTR1;
- einen Steuerverstärker VST mit Stellglied ST und Referenzspannungsquelle aus einem Widerstand RZ und einer Zenerdiode DZ;
- einem Türöffnerschaltkreis ETÖ;
- einen Ruftongenerator RTG mit einer Dioden-Kondensatorkombination D1-CR am Ausgang;
- einer rufgesteuerten Sprechweg-Türöffnerabschaltung aus Schaltglied SC, einem Steuerverstärker RVST, einem Zeitglied TI und einer Diode D2 mit einem Widerstand RR im Rufweg;
- leitungsseitigen Mithörsperren MSP1, MSP2 ... MSPn; und
- Ruftaster RT1, RT2 ... RTn.

Die Innenstation (Teilnehmerstation) weist folgende Komponenten auf:
- eine Brückenschaltung aus Widerständen R1i, R2i, R3i und einem Kondensator C2i;
- eine Konstantstromschaltung COSTR2;
- ein Mikrofon MIi;
- einen Mikrofonverstärker VMIi mit einem Ausgangswiderstand RIi;
- einen Lautsprecherverstärker VLSPi mit einem Koppelkondensator CLA;
- einen Lautsprecher LSPi mit einer Rufankopplungsdiode DL;
- einen Haltestromwiderstand RH;
- einer Betriebsanzeige mit einer Leuchtdiode LED und einem Vorwiderstand RLI;
- eine Zenerdiode Z zur Stabilisierung der Betriebsspannung;
- einen Ein- und Ausschalter SCH;
- eine Trenndiode DI.

An der Türstation TS sind die Anschlüsse für die Signalleitungsadern LS1 ... mit A1 ... An und der gemeinsame Anschluß für die Leitungsader LG mit B bezeichnet.

Die Anlage arbeitet folgendermaßen:

Bei Betätigung des Ruftasters RT des gewünschten Teilnehmers fließt der vom Ruftongenerator RTG kommende und durch die Diode D1 und den Kondensator CR mit Bezug auf den Gleichstrom auf der Leitung umgekehrt polarisierte tonfrequente Rufstrom über die Parallelschaltung von Diode D2 und Widerstand RR, den gedrückten Ruftaster RT, über die Teilnehmerleitungsader LS zur Innenstation, deren Rufankopplungsdiode DL zum Lautsprecher LSPi und über die gemeinsame Leitungsader LG zurück zum Fußpunkt des Ruftongenerators. Vom Lautsprecher der Innenstation ertönt somit das Rufsignal.

Gleichzeitig fällt an der Parallelschaltung aus Diode D2 und Widerstand RR eine Spannung ab, die vom Steuerverstärker RVST ausgewertet wird. Er schaltet das Zeitglied TI ein und steuert das im Ruhezustand geschlossene Schaltglied SC auf "Öffnen", d.h. damit bleibt der Sprechteil der Türstation und der Türöffnerschaltkreis ETÖ während des Rufens von der Leitung abgetrennt. Die entsprechende Mithörsperre MSP, an der ja die Rufspannung anliegt, wird eingeschaltet. Als Schaltelement der Mithörsperre dient ein Thyristor. Sein Haltestromkreis wird über die Signalleitungsader LS und die Widerstände RH und RLI sowie die Diode DI der Innenstation geschlossen, solange diese nicht mittels des Schalters SCH eingeschaltet wird.

Der Lautsprechervorverstärker VVLSP in der Türstation ist ein Differenzverstärker, wobei einer seiner Eingänge an den Spannungsteiler- und Brückenwiderständen R3a/R3b und der andere seiner Eingänge am Fußpunkt D der Konstantstromschaltung COSTR1, also auch am leitungsseitigen Anschluß der Brückenschaltung anliegt.

Solange nun die Innenstation nicht eingeschaltet ist, fließt nur ein ganz geringer Strom, nämlich der Haltestrom des Thyristors, durch die Konstantstromschaltung. Dadurch ist die Spannung am Fußpunkt D viel höher als am Knotenpunkt des Spanmnungsteilers R3a/R3b, und der Vorverstärker VVLSP wird durch die hohe Gleichspannungsdifferenz zwischen seinen Eingängen in die Sättigung getrieben, d.h. gesperrt.

Wird die Innenstation nun über den Schalter SCH eingeschaltet, wird damit ein Stromkreis geschlossen, der verläuft von der Betriebsspannungsquelle GLST über die Konstantstromschaltung COSTR1, den Fußpunkt D, das als steuerbaren Widerstand ausgebildete Stellglied ST, das Schaltglied SC, den Thyristor der eingeschalteten Mithörsperre MSP, die Signalleitungsader LS vom Anschlußpunkt A (hier vom Anschlußpunkt A1 über Signalleitungsader LS1) zum Anschlußpunkt L der Innenstation, deren Schalter SCH, die Konstantstromschaltung COSTR2, die Zenerdiode Z, die Trenndiode DI, dem Anschlußpunkt BI der Innenstation über die gemeinsame Leitungsader LG zum Anschlußpunkt B der Türstation und damit zu deren Massepunkt B0, der Gegenpol der Betriebsspannung ist.

Parallel zur Spannungsstabilisierungsdiode liegen die Stromverbraucher der Innenstation, nämlich die beiden Verstärker VMIi und VLSPi sowie die über den Widerstand RLI angeschlossene Leuchtdiode LED. Der Strom durch den Widerstand RH ist bei geschlossenem Schalter SCH wesentlich kleiner als zuvor, da die Spannung am Eingang L nun niedriger und an der Kathode der Leuchtdiode höher ist. Dadurch wird die Leitung nicht unnötig belastet. Die Leuchtdiode zeigt an, daß die Sprechverbindung steht. Der durch die Konstantstromschaltung COSTR1 in der Türstation fließende Betriebsstrom der eingeschalteten Innenstation bewirkt, daß die Spannung an ihrem Fußpunkt D um einige Volt absinkt. Dadurch ist nun die Gleichspannungsdifferenz zwischen den Eingängen des Vorverstärkers VVLST so gering geworden, daß dieser nun normal arbeitet.

Die Scheinwiderstände der Kondensatoren C1i und C2i der Innenstation und der Kondensatoren CL und CB der Türstation können für den interessierenden Frequenzbereich bei der nachfolgenden Betrachtung vernachlässigt werden. Die Ausgangswiderstände der Verstärker VMi und VMIi sind in den Widerständen RIi und RI mitenthalten.

Wird an der Innenstation gesprochen, werden die vom Mikrofon MIi in Sprechwechselspannungen umgesetzten Schallwellen im Verstärker VMIi verstärkt und über die Widerstände RIi und R1i, den Kondensator C2i sowie den Schalter SCH auf die Signalleitungsader am Anschlußpunkt L gegeben. Der Massepunkt mit Bezug auf das Signal ist über die Trenndiode DI mit der gemeinsamen Leitungsader LG verbunden.

Der Lautsprecherverstärker VLSTi ist als Differenzverstärker ausgebildet. Sein einer Eingang a liegt am Verbindungspunkt Fi der Brückenwiderstände R2i und R3i, und sein anderer Eingang b ist über den Kondensator C1i mit dem Verbindungspunkt von C2i und COSTR2 und von da aus über den Schalter SCH mit dem Anschlußpunkt L verbunden. Zwischen dem Anschlußpunkt L und dem Massepunkt der Innenstation liegt ein Scheinwiderstand, der von der Reihenschaltung aus Verbindungsleitungswiderstand, Mithörsperre MST, dem Scheinwiderstand der Türstation und die Trenndiode DI gebildet ist. Da sich der Widerstand R2i zum Widerstand R3i ebenso verhält wie der Widerstand R1i zum Scheinwiderstand zwischen dem Anschlußpunkt L und dem Massepunkt der Innenstation, und zwar sowohl nach Betrag als auch nach Phase (R1i, R2i und R3i sind entsprechend bemessen), sind die Spannungen an den Eingängen des Verstärkers VLSPi gleich groß und damit liegt am Lautsprecher LSPi kein Signal.

Die Sprechströme von der Innenstation zur Türstation fließen nun über die Signalleitungsader LS, die durchgeschaltete Mithörsperre MSP, das Schaltglied SG und das Stellglied ST zum Fußpunkt und Brückenpunkt D, an welchem der eine Eingang des Vorverstärkers VVLSP anliegt. Der andere Eingang der Vorverstärkers VVLSP erhält das Signal über die in Kaskade geschalteten Spannungsteiler R1/Ri und R2/R3, also mit verringerter Spannung. Die Signalspannungsdifferenz zwischen den beiden Vorverstärkereingängen wird verstärkt und dem Eingang des Verstärkers VLSP zugeführt, der das Differenzsignal wiederum verstärkt und dem angeschlossenen Lautsprecher LSP zuführt. Die Bandsperren sind in den Verstärker VLSP integriert, können aber natürlich auch dem Verstärker vorgeschaltet sein, was jedoch mehr Aufwand bedeuten würde. Sie senken die Verstärkung bei kritischen Frequenzbereichen ab, bei denen ein Pfeifen einsetzen könnte.

Die vom Mikrofon MI der Türstation abgegebenen Sprechwechselspannungen werden im angeschlossenen Verstärker VMI verstärkt und gelangen danach über den Widerstand RI auf den Brückenpunkt E und von dort weiter über den Brückenwiderstand R1, den Kondensator CL, den Fußpunkt B, das Stellglied ST, das Schaltglied SC und die eingeschaltete Mithörsperre MSP auf die Signalleitungsader LS. Das am Fußpunkt D, an dem ja auch ein Eingang des Vorverstärkers VVLSP anliegt, liegende Sprechsignal ist nach Betrag und Phase gleich groß wie das am anderen Eingang dieses Vorverstärkers anliegende Signal am Brückenpunkt F, also am Knotenpunkt der Widerstände R2 und R3a/R3b. Diese Signalgleichheit wird durch entsprechende Bemessung der Brückenwiderstände erreicht, damit das Widerstandsverhältnis zwischen R1 und der Summe der Widerstände von Stellglied ST, Schaltglied SC, Mithörsperre MSP, Verbindungsleitung und eingeschalteter Innenstation nach Betrag und Phase dem Widerstandsverhältnis zwischen dem Widerstand R2 und den parallelen Widerständen R3a und R3b entspricht. Damit beträgt aber das Eingangssignal für den Vorverstärker Null und der Lautsprecher LSP, der daran über den nachfolgenden Verstärker VLSP angekoppelt ist, erhält ebenfalls kein Signal.

Das von der Türstation über die Signalleitungsader an der Innenstation ankommende Sprechsignal fließt über den Schalter SCH und den Kondensator C1i zum Eingang b des Verstärker VLSPi und über die in Kaskade geschalteten Spannungsteilerwiderstände R1i/RIi und R2i/R3i zum Eingang A dieses Verstärkers. Der Kondensator C2i dient zur Gleichstromentkopplung. Die Signalspannungsdifferenz an den beiden Eingängen des Verstärkers VLSPi wird verstärkt und gelangt über den Kondensator CLA zum Lautsprecher LSPi. Die für Gleichstrom durchlässige Trenndiode DI verbindet den anderen Pol des Lautsprechers mit dem Fußpunkt des Verstärkers.

Zum Öffnen der Eingangstür, also zur Betätigung des Türöffners TÖ von der Innenstation aus, wird der Taster TÖT der Innenstation betätigt, wodurch deren Anschlußklemmen L und BI kurzgeschlossen werden. Damit liegt der Punkt C, der mit dem Eingang des Türöffnerschaltkreises ETÖ verbunden ist, auf nur um die kleinen Spannungsabfälle der Verbindungsleitung, der Mithörsperre MSP und des Schalters SC höherem Potential als das Massepotential. Dieses Kriterium wird von dem Türöffnerschaltkreis EPÖ ausgewertet; der Türöffner TÖ wird über einen Schalter des Türöffnerschaltkreises an die Speisewechselspannung angeschlossen und zur Freigabe der Tür betätigt.

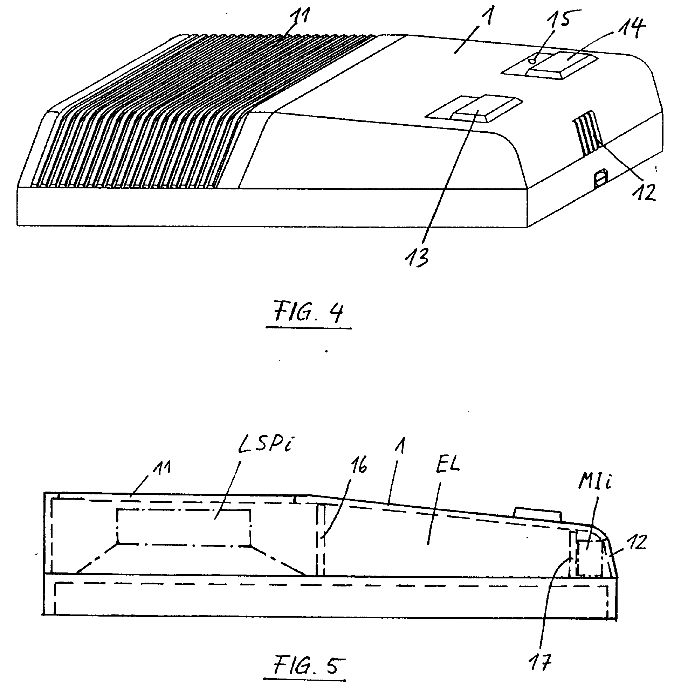

Damit bei einem Kurzschluß in der Verbindungsleitung oder bei Dauerbetätigung des Türöffnertasters an der Innenstation keine thermische Überlastung der Konstantstromschaltung COSTR1 der Türstation eintreten kann, ist sie gemäß Figur 3 mit einer Schutzschaltung ausgerüstet. Die eigentliche Konstantstromschaltung besteht aus dem Transistor TR2, der Zenerdiode DR1 und den Widerständen R12 und R13. Steigt die Kollektor-Emitter-Spannung eines Transistors TR1 über die Summe aus der Referenzspannung an einer Zenerdiode DR2 und der Schwellenspannung der Basis-Emitter-Strecke des Transistors TR1 an, so schaltet der Transistor TR1 durch und sperrt den Transistor TR2 durch Kurzschließen von dessen Basis-Emitter-Strecke. Es fließt dann nur noch ein Reststrom, der hauptsächlich durch den frei wählbaren Widerstand R11 sowie die Widerstände R12 und R13 bestimmt ist.

Nach Beseitigung des Kurzschlusses oder Loslassen des Türöffnertasters steigt die Spannung am Punkt D wieder so weit an, daß der Transistor TR1 wieder gesperrt wird, und dann die Konstantstromschaltung wieder normal arbeitet.

Zur Ausregelung der unterschiedlichen Widerstände der Verbindungsleitungen zwischen Türstation und den einzelnen Innenstationen dient das Stellglied ST. Es ergänzt den Widerstand der jeweils angeschalteten Innenstation auf einen konstanten Wert, der in den Brückenabgleich miteinbezogen ist. Dazu wird die Spannung an der eingeschalteten Innenstation zwischen den Leitungsanschlußpunkten L und BI auf einfache Weise auf einen für alle Innenstationen gleichen Wert eingestellt, indem als Zenerdiode Z eine Zenerdiode mit einstellbarer Spannung eingesetzt wird.

Der Differenzverstärker VST der Türstation greift nun die Gleichspannung am Fußpunkt D ab und vergleicht sie mit der Referenzspannung an der Zenerdiode DZ, die ebenfalls einstellbar ist.

Mit der daraus resultierenden und verstärkten Differenzspannung wird das angeschlossene Stellglied ST nachgesteuert, bis die Spannung am Fußpunkt D dem Sollwert entspricht. Da der von der Konstantstromschaltung COSTR1 auf die Leitung eingespeiste Strom konstant ist, ergibt sich damit für die Brückenschaltung ein Widerstand konstanten Werts aus der Summe des tatsächlichen Leitungswiderstands, dem Widerstand des Stellglieds ST und des konstanten Widerstandswerts aus Mithörsperre MSP und Schaltglied SC. Dieser Gesamtwert ergibt sich als Quotient aus der Differenz der Spannung zwischen dem Fußpunkt D und Masse und der Spannung über den Klemmen L und BI der Innenstation und dem Speisestrom auf der Leitung.

Als Stellglied ST, d.h. als regelbarer Widerstand, eignet sich ein Feldeffekttransistor, wie aus der Fachliteratur ersichtlich ist. Eine eingebaute Gegenkopplung für die Sprachfrequenz-Wechselspannungen im Verstärker VST und ein Tiefpass an dessen Ausgang verhindern Einflüsse der Sprechströme auf die Regelung.

Da der Schalter SCH der Innenstation während des Gesprächs dauernd geschlossen bleiben muß, ist ein normaler Taster hierfür nicht geeignet, da dieser sonst während des ganzen Gesprächs ständig gedrückt werden müßte, was unpraktisch und unbequem ist. Der Schalter SCH ist deshalb ein bei Betätigung einrastender Taster oder dergleichen, so daß er durch einmalige Betätigung geschlossen wird und geschlossen bleibt. Dabei besteht natürlich die Gefahr, daß nach Gesprächsende vergessen wird, durch erneute Betätigung des Schalters SCH die Innenstation wieder abzuschalten. Die Sprechverbindung zwischen Innenstation und Türstation bliebe damit bestehen und von der Straße aus könnte man mithören, was sich in der betreffenden Wohnung abspielt. Deshalb steuert das während des Rufes über den Verstärker RVST eingeschaltete Zeitglied TI nach einer vorgegebenen Zeit das Schaltglied SC kurzzeitig auf "Öffnen" und bewirkt damit das Abschalten dieser Innenstation, indem der Haltestromkreis der zugehörigen Mithörsperre MSP unterbrochen wird und diese öffnet.

Die Figuren 4 und 5 zeigen ein Ausführungsbeispiel der Innenstation in Form eines flachen, an der Wand zu befestigenden Geräts. Der Gehäusedeckel 1 weist, wie aus Figur 4 ersichtlich ist, im Lautsprecherbereich eine Schallaustrittsöffnung 11 und im Bereich der Unterkante eine Schalleintrittsöffnung 12 auf, die dem Mikrofon zugeordnet ist. Als Bedienungselemente sind am Gehäuse eine Taste 13, die dem Türöffnertaster TÖT im Schaltbild nach Figur 2 zugeordnet ist, und eine Taste 14, die dem Schalter SCH im Schaltbild nach Figur 2 zugeordnet ist, angeordnet, und im Bereich der Taste 14 befindet sich als Anzeigeelement 15 die im Schaltbild nach Figur 2 mit LED bezeichente Leuchdiode. Die Anordnung der im wesentlichen nach unten gerichteten Schallöffnung 12 für das Mikrofon und der im wesentlichen horizontal gerichteten Schallöffnung 11 für den Lautsprecher (Figur 4 zeigt das Gerät liegend; die Gebrauchslage ist jedoch vertikal an der Wand befestigt) sorgt für eine bestmögliche akustische Entkopplung zwischen Lautsprecher und Mikrofon.

Figur 5 zeigt eine sehr schematisch gehaltene Seitenansicht des Innenstation-Geräts nach Figur 4, um die im Zusammenhang mit der akustischen Entkopplung wesentlichen Merkmale des Innenaufbaus zu verdeutlichen. Das Gehäuseinnere ist durch zwei Trennwände 16 und 17 in drei Kammern unterteilt, von denen die oberste Kammer dem Lautsprecher und die unterste Kammer dem Mikrofon zugeordnet ist und die dazwischen liegende mittlere Kammer zur Aufnahme der nicht näher dargestellten Elektronik EL der Innenstation dient. Das Mikrofon MIi ist dabei im wesentlichen nach unten zur Schalleintrittsöffnung 12 hin orientiert. Der Lautsprecher LSPi in der obersten Kammer ist vorzugsweise mit der Besonderheit eingebaut, daß er mit seiner Membran zum Gehäuseboden hin und mit seiner Rückseite zur Schallaustrittsöffnung 11 orientiert ist. Dabei ist der Lautsprecher so eingebaut, daß seine Membran einen abgeschlossenen Raum zusammen mit dem Gehäuseboden begrenzt und mit der Membranvorderseite den Schalldruck an diesen geschlossenen Raum abgibt. Die Trennwand 16 bewirkt zusammen mit den Gehäuseseitenwänden eine günstige Beeinflussung der Schallaustrittsrichtung nach vorne. Am Gehäuseboden treten keine Reflexionen auf. Auch diese Maßnahme bringt eine spürbare Verbesserung der akustischen Entkopplung.

## Patentansprüche

1. Türsprechanlage, bestehend aus einer Türstation (TS) und mindestens einer damit über eine Verbindungsleitung verbindbaren Innenstation (IS), und mit den Funktionen Rufen der Innenstation von der Türstation aus, Sprechen zwischen Türstation und Innenstation, und Türöffnen von der Innenstation aus, wobei die Sprechfunktion als Gegensprechen im Freisprechbetrieb für beide Gesprächsteilnehmer ausgebildet ist, und wobei die Türstation mindestens einen Ruftaster (RT), eine aus Lautsprecher (LSP) und zugehöriger Verstärkerschaltung (VVLSP, VLSP) bestehende Lautsprecherschaltung und eine aus Mikrofon (MI) und zugehöriger Verstärkerschaltung (VMI) bestehende Mikrofonschaltung sowie einen elektrischen Türöffner (TÖ) und eine Stromversorgungsschaltung (TR, GLST) aufweist, und wobei jede Innenstation einen Fin/Ausschalter (SCH), einen Türöffnertaster (TÖT), einen Lautsprecher (LSPe) und ein Mikrofon (MIe) aufweist, mit folgenden Merkmalen :
a) eine zweiadrige Verbindungsleitung (LS, LG) zwischen Türstation und jeder Innenstation dient zur Übertragung sowohl der Sprechwechselströme zwischen Türstation und Innenstation als auch zur Betriebsstromversorgung der Innenstation von der Türstation aus,
b) der Lautsprecher (LSPi) und das Mikrofon (MIi) der Innenstation verfügen jeweils über eigene, in der Innenstation angeordnete Verstärkerschaltungen (VLSTi, VMIi),
c) sowohl in der Türstation als auch in jeder Innenstation sind Lautsprecherschaltung und Mikrofonschaltung durch eine Brückenschaltung entkoppelt,
d) Ein- und Auskopplung des Innenstation-Speisegleichstroms erfolgt in Türstation und Innenstation über für die Sprechwechselströme hochohmige Zweipole (COSTR1, COSTR2),
e) der Ruf der Innenstation von der Türstation erfolgt über einen mit Bezug auf den Innenstation-Speisegleichstrom entgegengesetzt gepolten Rufstrom auf der Verbindungsleitung,
f) die Türstation enthält eine Schaltung (RVST, SC), welche den Speisegleichstrom für die Innenstation während der Dauer der Betätigung des Ruftasters (RT) unterbricht,
g) der Türöffnertaster (TÖT) schließt bei Betätigung die beiden Verbindungsleitungsadern kurz und die Türstation enthält eine Schaltung (EPÖ), die auf das dadurch bedingte Absinken der Spannung auf der Verbindungsleitung unter einen Bezugswert anspricht und den Türöffner (TÖ) betätigt.

2. Türsprechanlage nach Anspruch 1, dadurch gekennzeichnet, daß die Zweipole (COSTR1, COSTR2) zur Ein- und Auskopplung des Speisegleichstroms als Konstantstromschaltungen ausgebildet sind.

3. Türsprechanlage nach Anspruch 1 oder 2, dadurch gekennzeichnet, daß in den Sprechstromkreis zwischen Türstation und Innenstation eine Mithörsperre (MSP) eingeschaltet ist, die als im Ruhezustand offenes, durch Betätigung des Ein/Ausschalters (SCH) der Innenstation einschaltbares Schaltelement mit Selbsthaltefunktion ausgebildet ist.

4. Türsprechanlage nach Anspruch 3, dadurch gekennzeichnet, daß die Türstation eine Zeitgeberschaltung (TI) enthält, die bei Betätigung eines Ruftasters (RT) eingeschaltet wird und nach einer vorgegebenen Zeitspanne über ein Schaltglied (SC) die Speisegleichstromzufuhr zur Innenstation kurzzeitig unterbricht, um die Selbsthaltefunktion der Mithörsperre zu unterbrechen und diese zu öffnen.

5. Türsprechanlage nach Anspruch 3 oder 4, dadurch gekennzeichnet, daß die Mithörsperren (MSP) für sämtliche Innenstationen in der Türstation angeordnet sind.

6. Türsprechanlage nach einem der Ansprüche 1 bis 5, dadurch gekennzeichnet, daß die Sprechschaltung der Türstation Bandsperrfilter (BSP) enthält, die Amplitudenüberhöhungen im Übertragungsbereich beider Übertragungswege aufgrund von Lautsprechergehäuseresonanzen oder anderen Störeffekten absenkt.

7. Türsprechanlage nach einem der Ansprüche 2 bis 6, dadurch gekennzeichnet, daß die Konstantstromschaltung (COSTR1) der Türstation eine spannungsabhängig arbeitende Schutzschaltung (TR1, DR2, R10, R11) aufweist, die während der Dauer eines wesentlichen Absinkens der Spannung auf der Verbindungsleitung unter die Innenstation-Betriebsspannung die Konstantstromschaltung im wesentlichen sperrt.

8. Türsprechanlage nach Anspruch 7, dadurch gekennzeichnet, daß die Schutzschaltung eine Spannungskomparatorschaltung ist, die den Spannungswert am Ausgang (D) der Konstantstromschaltung mit einer Bezugsspannung (DR2) vergleicht und bei Unterschreiten der Bezugsspannung die Konstantstromschaltung sperrt.

9. Türsprechanlage nach einem der Ansprüche 1 bis 8, dadurch gekennzeichnet, daß die Summenverstärkung von Mikrofon- und Lautsprecherzweig in der Türstation und die Summenverstärkung von Mikrofon- und Lautsprecherzweig in der Innenstation im wesentlichen gleich sind.

10. Türsprechanlage nach einem der Ansprüche 1 bis 9, dadurch gekennzeichnet, daß das Mikrofon (MIi) der Innenstation im wesentlichen nach unten zu einer im unteren Randbereich des Gehäuses (1) angeordneten Schalleintrittsöffnung (12) orientiert ist, während der Lautsprecher (LSPI) in einer abgetrennten Gehäusekammer mit im wesentlichen horizontaler Abstrahlrichtung angeordnet ist.

11. Türsprechanlage nach einem der Ansprüche 1 bis 10, dadurch gekennzeichnet, daß der Lautsprecher (LSPi) mindestens der Innenstation so orientiert ist, daß die Lautsprechermembran im wesentlichen zur Gehäuserückwand hin orientiert ist.

12. Türsprechanlage nach Anspruch 11, dadurch gekennzeichnet, daß der Lautsprecher der Innenstation so eingebaut ist, daß seine Membran zusammen mit der Gehäuserückwand eine abgeschlossene Kammer bildet, und daß der den Lautsprecher aufnehmende Gehäuseteil durch eine Trennwand (16) vom übrigen Gehäuse abgetrennt ist.

13. Türsprechanlage nach einem der Ansprüche 1 bis 12, dadurch gekennzeichnet, daß die Innenstation mit einem Leuchtanzeigeelement (LED) ausgestattet ist, das bei geschlossenem Sprechstromkreis aufleuchtet.

## Claims

1. An intercom system with a door station (TS) and at least one inside station (IS) connected therewith through a connecting lead, the intercom system having the functions call inside station from door station, speak between inside station and door station, and open door from inside station, the speak function being a two-way communication with hands-free operation for both the door station and the inside station, the door station having at least one call button (RT), a loudspeaker circuit with a loudspeaker (SP) and a loudspeaker amplifier circuit (VVLSP, VLSP), a microphone circuit with a microphone (MI) and an associated microphone amplifier circuit (VMI), and an electric door opener (TÖ) and a power supply circuit (TR, GLST), and each inside station having an on/off switch (SCH), a door opening button (TÖT), a loudspeaker (LSPi) and a microphone (MIi), the intercom system having the following features:
a) a two-wire connecting lead (LS, LG) between the door station and each inside station serves both to transmit conversation ac-currents between the door station and a respective inside station and to supply an operating current from the door station to the respective inside station,
b) the loudspeaker (LSPi) and the microphone (MIi) of the inside station each have a separate amplifier circuit (VLSTi, VMIi) associated therewith,
c) the loudspeaker circuit and the microphone circuit in the door station and in each inside station as well are decoupled by a bridge circuit,
d) supply of the dc-operating current for the inside station in the door station and decoupling of this dc-operating current in the inside station is made through bipole circuits (CUSTR1, CUSTR2) having high impedance with regard to said conversation ac-currents,
e) calling the inside station from the door station occurs by means of a call current on said connecting lead, said call current having opposite polarity with respect to the operating dc-current for the inside station,
f) the door station includes a circuit (RVST, SC) for interrupting the operating dc-current for the inside station during the period of operation of said call button (RT),
g) said door open button (TÖT) is adapted to short-circuit the two connecting lead wires when the door open button is operated, and the inside station includes a circuit (EPÖ) adapted to operate said door opener (TÖ) in response to a voltage drop below a reference value caused in said connecting lead by said short-circuiting.

2. The intercom system of claim 1, characterized in that said bipole circuits (CORST1, CORST2) for supply and decoupling of said supply dc-current are constant-current circuits.

3. The intercom system of claim 1 or 2, characterized in that a monitoring inhibitor (MSP) is connected into the conversation current circuit between the door station and the inside station, said monitoring inhibitor comprising a switching element having a self-holding function, said switching element having a normally open position and being switchable into a closed position by operation of the on/off-switch (SCH) of the inside station.

4. The intercom system of claim 3, characterized in that the door station includes a timer circuit (TI) adapted to be switched on by operation of any of said call buttons (RT), and, after expiry of a preset time interval, to shortly interrupt the operating dc-current supply to the inside station via a switching member (SC) to disable the self-holding function of said monitoring inhibitor and to open the same.

5. The intercom system of claim 3 or 4, characterized in that all monitoring inhibitor (MSP) associated with said inside stations are located in the door station.

6. The intercom system of any of claims 1 to 5, characterized in that the conversation circuit of the door station includes band-rejection filters (BSP) for supressing exalted amplitude within the transmission band of the two-way communication resulting from loudspeaker housing resonances or other parasitics.

7. The intercom system of any of claims 2 to 6, characterized in that said constant-current circuit (COSTR1) of the door station includes a voltage-responsive protective circuit (TR1, DR2, RC10, R11) adapted to substantially block said constant-current circuit during the period of a substantial voltage drop on said connecting lead below the operating voltage of the inside station.

8. The intercom system of claim 7, characterized in that said protective circuit is a voltage comparator circuit which compairs the voltage value at the output (D) of said constant current-circuit with a reference voltage (DR2) and which inhibits said constant-current circuit when said voltage value is less than said reference voltage.

9. The intercom system of any of claism 1 to 8, characterized in that the summary amplification of the microphone circuit and the loudspeaker circuit in the door station is substantially equal to the summary amplification of the microphone circuit and the loudspeaker circuit in the inside station.

10. The intercom system of any of claims 1 to 9, characterized in that the microphone (MIi) of the inside station is oriented substantially downwardly toward a sound inlet opening (12) in a lower edge area of the housing (1), while the loudspeaker (LSPI) is located in a separate housing chamber with a substantially horizontal radiating direction.

11. The intercom system of any to claims 1 to 10, characterized in that the loudspeaker (LSPi) of at least said inside station is oriented so that the loudspeaker diaphragm substantially faces the rear wall of the housing.

12. The intercom system of claim 11, characterized in that the loudspeaker is mounted in the inside station such that its diaphragm cooperates with the rear wall of the housing to form a sealed chamber, and that the housing portion which contains said loudspeaker is separated from the rest of the housing by a partition wall (16).

13. The intercom system of any of claims 1 to 12, characterized in that the inside station includes a light-emitting element (LED) lighting when a conversation circuit is closed.

## Revendications

1. Portier électrique composé d'un poste de porte (TS) et d'au moins un poste intérieur (IS) relié par une ligne de liaison à celui-ci, et comprenant les fonctions d'appel du poste intérieur depuis le poste de porte, de conversation entre le poste de porte et le poste intérieur ainsi que d'ouverture de porte depuis le poste intérieur, la fonction de conversation étant agencée en communication bidirectionnelle "à mains libres" entre les deux participants, et le poste de porte présentant au moins une touche d'appel (RT), un circuit de haut-parleur, composé d'un haut-parleur (LSP) et d'un circuit amplificateur (VVLSP, VLSP) associé, et un circuit de microphone, composé d'un microphone (MI) et d'un circuit amplificateur (VMI) associé, ainsi qu'un dispositif d'ouverture de porte (TÖ) électrique et un circuit d'alimentation en courant (TR, GLST), et chaque poste intérieur comportant un interrupteur marche/arrêt (SCH), une touche d'ouverture de porte (TÖT), un haut-parleur (LSPe) et un microphone (MIe), lequel portier présente les caractéristiques suivantes:
a) une ligne de liaison (LS, LG) à deux fils entre le poste de porte et chaque poste intérieur sert à la fois à la transmission des courants alternatifs de conversation entre le poste de porte et le poste intérieur et à l'alimentation en courant de service du poste intérieur depuis le poste de porte,
b) le haut-parleur (LSPi) et le microphone (MIi) du poste intérieur comportent respectivement leurs propres circuits amplificateurs (VLSTi, VMIi) qui sont disposés dans le poste intérieur,
c) aussi bien dans le poste de porte que dans chaque poste intérieur, le circuit de haut-parleur et le circuit de microphone sont découplés par un montage en pont,
d) le couplage et le découplage du courant continu d'alimentation du poste intérieur ont lieu dans le poste de porte et le poste intérieur par l'intermédiaire de dipôles (COSTR1, COSTR2) à haute impédance pour les courants alternatifs de communication,
e) l'appel du poste intérieur depuis le poste de porte a lieu par un courant d'appel sur la ligne de liaison qui est de polarité contraire à celle du courant continu d'alimentation du poste intérieur,
f) le poste de porte contient un circuit (RVST, SC) qui interrompt le courant continu d'alimentation pour le poste intérieur pendant la durée d'actionnement de la touche d'appel (RT),
g) lors de son actionnement, la touche d'ouverture de porte (TÖT) court-circuite les deux fils de la ligne de liaison, et le poste de porte contient un circuit (BPÖ) qui réagit à la baisse de tension, ainsi provoquée sur la ligne de liaison, en-dessous d'une valeur de référence et actionne le dispositif d'ouverture de porte (TÖ).

2. Portier électrique selon la revendication 1, caractérisé en ce que les dipôles (COSTR1, COSTR2) pour le couplage et le découplage du courant continu d'alimentation sont agencés sous la forme de circuits à courant constant.

3. Portier électrique selon la revendication 1 ou 2, caractérisé en ce qu'un dispositif d'interdiction d'écoute (MSP) est intercalé dans le circuit de courant de conversation entre le poste de porte et le poste intérieur, lequel dispositif est agencé sous la forme d'un élément de commutation à fonction d'auto-maintien qui est ouvert au repos et peut être mis en circuit par actionnement de l'interrupteur marche/arrêt (SCH) du poste intérieur.

4. Portier électrique selon la revendication 3, caractérisé en ce que le poste de porte contient un circuit-horloge (TI) qui est mis en circuit lors de l'actionnement d'une touche d'appel (RT) et interrompt, après un laps de temps prédéterminé, brièvement par l'intermédiaire d'un élément de commutation (SC) l'amenée de courant continu d'alimentation en direction du poste intérieur, afin d'interrompre la fonction d'auto-maintien du dispositif d'interdiction d'écoute et d'ouvrir celui-ci.

5. Portier électrique selon la revendication 3 ou 4, caractérisé en ce que les dispositifs d'interdiction d'écoute (MSP) pour tous les postes intérieurs sont disposés dans le poste de porte.

6. Portier électrique selon l'une des revendications 1 à 5, caractérisé en ce que le circuit de conversation du poste de porte contient des filtres coupe-bandes (BSP) qui abaissent des augmentations d'amplitude dans la plage de transmission des deux voies de transmission dues à des résonances du boîtier du haut-parleur ou à d'autres perturbations.

7. Portier électrique selon l'une des revendications 2 à 6, caractérisé en ce que le circuit à courant constant (COSTR1) du poste de porte présente un circuit protecteur (TR1, DR2, R10, R11) qui travaille en fonction de la tension et bloque essentiellement le circuit à courant constant pendant la durée d'une baisse sensible de la tension sur la ligne de liaison en-dessous de la tension de service du poste intérieur.

8. Portier électrique selon la revendication 7, caractérisé en ce que le circuit protecteur est constitué d'un circuit comparateur de tension qui compare la valeur de tension à la sortie (D) du circuit à courant constant avec une tension de référence (DR2) et bloque le circuit à courant constant lorsque cette valeur est inférieure à la tension de référence.

9. Portier électrique selon l'une des revendications 1 à 8, caractérisé en ce que l'amplification additive de la branche du microphone et du haut-parleur dans le poste de porte et l'amplification additive de la branche du microphone et du haut-parleur dans le poste intérieur sont pratiquement identiques.

10. Portier électrique selon l'une des revendications 1 à 9, caractérisé en ce que le microphone (MIi) du poste intérieur est orienté essentiellement vers le bas, en direction d'une ouverture d'entrée des sons (12) disposée dans la région du bord inférieur du boîtier (1), tandis que le haut-parleur (LSPI) est disposé dans une chambre séparée du boîtier, dans une direction d'émission sensiblement horizontale.

11. Portier électrique selon l'une des revendications 1 à 10, caractérisé en ce que le haut-parleur (LSPi) au moins du poste intérieur est orienté de telle manière que sa membrane soit essentiellement orientée en direction de la paroi arrière du boîtier.

12. Portier électrique selon la revendication 11, caractérisé en ce que le haut-parleur du poste intérieur est monté de telle manière que sa membrane forme une chambre fermée avec la paroi arrière du boîtier et que la partie du boîtier dans laquelle est logé le haut-parleur est séparée par une cloison (16) du reste du boîtier.

13. Portier électrique selon l'une des revendications 1 à 12, caractérisé en ce que le poste intérieur est équipé d'un élément formant voyant lumineux (LED) qui s'allume lorsque le circuit de conversation est fermé.
